# EUROPEAN PATENT APPLICATION

(11) **EP 0 648 003 A1**
(43) Date of publication of application: **12.04.1995**
(21) Application number: 94202870.5
(22) Date of filing: 04.10.1994
(51) Int. Cl.: H02H 9/02

(54) **Circuit arrangement**

(30) Priority: 11.10.1993 BE 9301065
(71) Applicant: PHILIPS ELECTRONICS N.V., 5621 BA Eindhoven (NL)
(72) Inventor: Overgoor, Bernardus Josephus Maira, NL-5656 AA Eindhoven (NL)
(74) Representative: Evers, Johannes Hubertus Maria

(57) **Abstract**

The invention relates to a circuit arrangement for operating a load (La) from a supply voltage, provided with
- input terminals (K1, K2) for connection to poles of a supply voltage source,
- a circuit portion V for limiting an input current which flows through the input terminals owing to the supply voltage during operation, comprising a first field effect transistor S1 provided with two main electrodes and a gate electrode and coupled to an input terminal such that the input current flows through both main electrodes (K3, K4) of the field effect transistor S1 during operation.

According to the invention, the first field effect transistor S1 is of the depletion FET type and is coupled to the input terminals of the circuit arrangement exclusively *via* the main electrodes.

It is achieved thereby that the input current is limited by comparatively simple means.

## Description

The invention relates to a circuit arrangement for operating a load from a supply voltage, provided with
- input terminals for connection to poles of a supply voltage source,
- a circuit portion V for limiting an input current which flows through the input terminals owing to the supply voltage during operation, comprising a first field effect transistor S1 provided with two main electrodes and a gate electrode and coupled to an input terminal such that the input current flows through both main electrodes of the field effect transistor S1 during operation.

Such a circuit arrangement is known from European Patent Application EP 375020. In the known circuit arrangement, the gate electrode of the field effect transistor is coupled to a control circuit which generates a signal on the gate electrode which is a measure for the instantaneous value of the supply voltage. When the supply voltage reaches a comparatively high value, the control circuit generates a signal on the gate electrode which causes the impedance of the field effect transistor between the two main electrodes to decrease. Since the input current flows through the two main electrodes of the field effect transistor, the increasing impedance of the field effect transistor between the main electrodes limits the input current. The known circuit arrangement is thus effectively protected against a comparatively high input current which may occur without protection in the case of supply voltage transients or as a switching-on effect. Such a comparatively high input current could shorten the operational life or even lead to the destruction of components of the circuit arrangement. A disadvantage of the known circuit arrangement is that the presence of a control circuit renders the circuit arrangement comparatively expensive and complicated.

The invention has for its object to provide a circuit arrangement in which the circuit portion V for limiting the input current is realised in a comparatively inexpensive and simple manner.

A circuit arrangement of the kind mentioned in the opening paragraph is for this purpose characterized in that the first field effect transistor S1 is of the depletion FET type and is coupled to the input terminals of the circuit arrangement exclusively *via* the main electrodes.

A circuit arrangement according to the invention has no control circuit for generating a signal for influencing the impedance of the field effect transistor between the main electrodes. Owing to the absence of a control circuit, the circuit arrangement is of a comparatively simple construction, and thus comparatively inexpensive. When the supply voltage is comparatively low, the field effect transistor in a circuit arrangement according to the invention behaves approximately as an ohmic resistor. At a comparatively high supply voltage, however, the field effect transistor behaves approximately as a current source. This means that the input current is independent of the supply voltage over a certain range of this supply voltage. It is achieved thereby that the input current is limited by the field effect transistor in the case of a comparatively high value of the supply voltage.

In an advantageous embodiment of a circuit arrangement according to the invention, the circuit portion V for limiting the input current comprises a further field effect transistor S2 provided with two further main electrodes and a further gate electrode, the further field effect transistor being of the depletion FET type and being coupled to the input terminals of the circuit arrangement exclusively *via* the further main electrodes, while the first field effect transistor S1 is connected in series with the further field effect transistor S2 in that a main electrode of field effect transistor S1 is connected to a corresponding main electrode of field effect transistor S2.

If the supply voltage is an AC voltage, a circuit portion V constructed in this manner is capable of limiting the input current in two directions. In circuit arrangement according to the invention in which the input terminals are coupled to rectifier means for rectifying the supply voltage, a circuit portion V constructed in this manner may be positioned at the input side of the rectifier means. An important advantage of this is that the rectifier means need not be dimensioned for the possible occurrence of a comparatively high supply voltage.

Field effect transistors which may be used are, for example, junction FETs or depletion MOSFETs. It was found that these two semiconductor elements limit the input current of a circuit arrangement according to the invention in an effective manner.

When the field effect transistors in the circuit portion V are junction FETs, it is possible to realise a satisfactory current-limiting action when the gate electrodes are not connected to any other components of the circuit arrangement. It was also found for the case in which the circuit portion V comprises more than one junction FET that a satisfactory current-limiting action of the circuit portion V can be realised when the gate electrodes of the junction FETs present in circuit portion V are interconnected by a conductive chain. It was also found, both when junction FETs and when depletion MOSFETs are used in the circuit portion V, that a satisfactory current-limiting action is obtained when the gate electrode of each field effect transistor is connected to a main electrode (drain) of the same field effect transistor.

It is advantageous to construct the circuit portion V as an integrated circuit, especially when the circuit portion V comprises several field effect transistors.

The invention may be used in a highly advantageous manner in a circuit arrangement for operating a discharge lamp, more in particular a low-pressure mercury discharge lamp. Circuit arrangements for operating discharge lamps are often provided with comparatively complicated and expensive components such as, for example, a DC-DC converter and/or a DC-AC converter for generating a high-frequency current. By using the invention, it is possible to realise a circuit portion for limiting the input current in a comparatively inexpensive and simple manner, so that less high requirements need be imposed on the dimensioning of the said components. This means that the realisation is possible by means of comparatively inexpensive components.

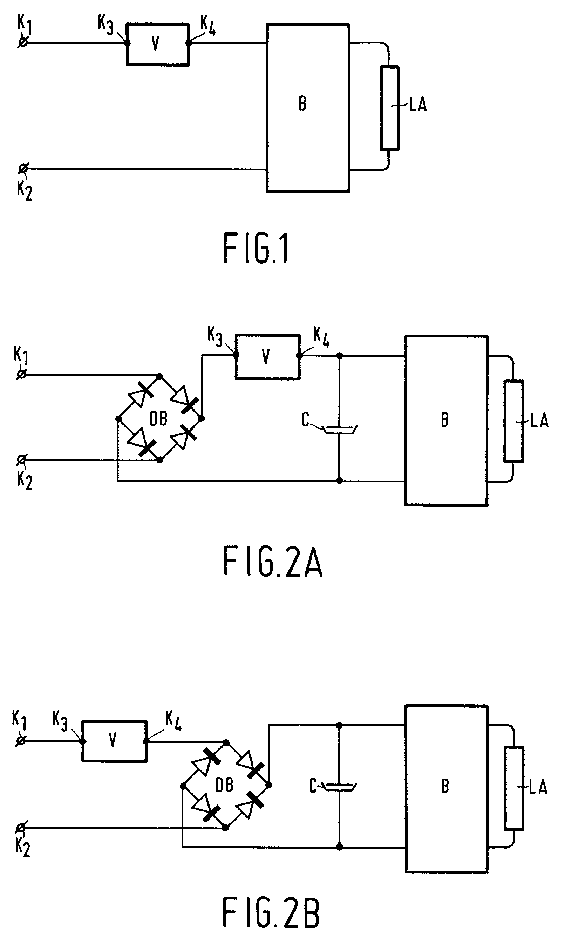

Embodiments of a circuit arrangement according to the invention will be explained in more detail with reference to a drawing.
In the drawing, Fig. 1 diagrammatically shows a embodiment of a circuit arrangement according to the invention;
Figs. 2a and 2b also diagrammatically show an embodiment of a circuit arrangement according to the invention;
Fig. 3 shows a number of embodiments of a circuit portion V forming part of the circuit arrangements shown in Figs. 1 and 2; and
Fig. 4 diagrammatically shows current-voltage characteristics of the embodiments of circuit portion V shown in Fig. 3.

The circuit arrangement shown in Fig. 1 is suitable for being fed with a DC voltage. In Fig. 1, K1 and K2 are terminals suitable for connection to a supply voltage source. V is a circuit portion for limiting an input current which flows through the input terminals during operation as a result of a supply voltage delivered by the supply voltage source. Circuit portion B is the remaining portion of the circuit arrangement, and La is a load coupled to the circuit portion B. The circuit portion B may be formed, for example, by a DC-AC converter and the load La may be a discharge lamp. Circuit portion V is coupled to input terminal K1 *via* terminal K3, and to an input of circuit portion B *via* terminal K4. The input terminal K2 is coupled to a further input of circuit portion B.

The operation of the circuit arrangement shown in Fig. 1 is as follows. When the input terminals K1 and K2 are connected to a supply voltage source which delivers a DC voltage, an input current will flow through the circuit portions V and B, and the load La will be operated. When the potential difference between terminals K3 and K4 is comparatively high, for example as a result of a high instantaneous value of the amplitude of the DC voltage delivered by the supply voltage source, or owing to a switching-on effect, then the circuit portion V will limit the input current flowing through the circuit arrangement.

The circuit arrangements shown in Figs. 2a and 2b are suitable for being supplied with a supply voltage of changing polarity. In Figs. 2a and 2b, the components and circuit portions corresponding to components and circuit portions of the embodiment shown in Fig. 1 have the same reference symbols. DB is a diode bridge for full rectification of the supply voltage and C is a buffer capacitor. Input terminals of the diode bridge DB are connected to input terminals K1 and K2 in the embodiment shown in Fig. 2a. An output terminal of the diode bridge DB is connected to terminal K3 of circuit portion V. Terminal K4 of circuit portion V is connected to a first side of buffer capacitor C and a first input of circuit portion B. A further side of buffer capacitor C is connected to a further output terminal of the diode bridge DB and to a further input of circuit portion B. The load La is coupled to circuit portion B. The embodiment shown in Fig. 2b differs from the embodiment shown in Fig. 2a exclusively in that the circuit portion V is arranged in a different position in the circuit arrangement: in the embodiment shown in Fig. 2b the circuit portion V is coupled to input terminal K1 *via* terminal K3 and to a first input of diode bridge DB *via* terminal K4.

The operation of the circuit arrangements shown in Figs. 2a and 2b is as follows. When the input terminals K1 and K2 are connected to a supply voltage source which delivers a supply voltage of changing polarity, an input current will flow through circuit portion V. The potential difference between terminals K3 and K4 may reach a comparatively high value, especially immediately after switching-on of the circuit arrangement, since the buffer capacitor C has not yet been charged. In a later stage, during stationary operation of the load La, the potential difference between terminals K3 and K4 may reach a comparatively high value owing to the presence of supply voltage transients. The circuit portion V will limit the input current when the potential difference between terminals K3 and K4 is comparatively high. In the embodiment shown in Fig. 2a, the input current flows exclusively from terminal K3 to terminal K4. This means in this embodiment that the circuit portion V need be capable of limiting the input current in one direction only. In the embodiment shown in Fig. 2b, however, the input current flows alternately from terminal K3 to terminal K4 and from terminal K4 to terminal K3, depending on the instantaneous polarity of the supply voltage. In the embodiment shown in Fig. 2b, the circuit portion V must be capable of limiting the input current in two directions. This imposes stricter requirements on the circuit portion V, but this is partly compensated in that the diode bridge DB in the embodiment of Fig. 2b need not be dimensioned for accommodating a comparatively high voltage drop across the diodes in the reverse direction. Such a dimensioning may indeed be necessary in the embodiment shown in Fig. 2a.

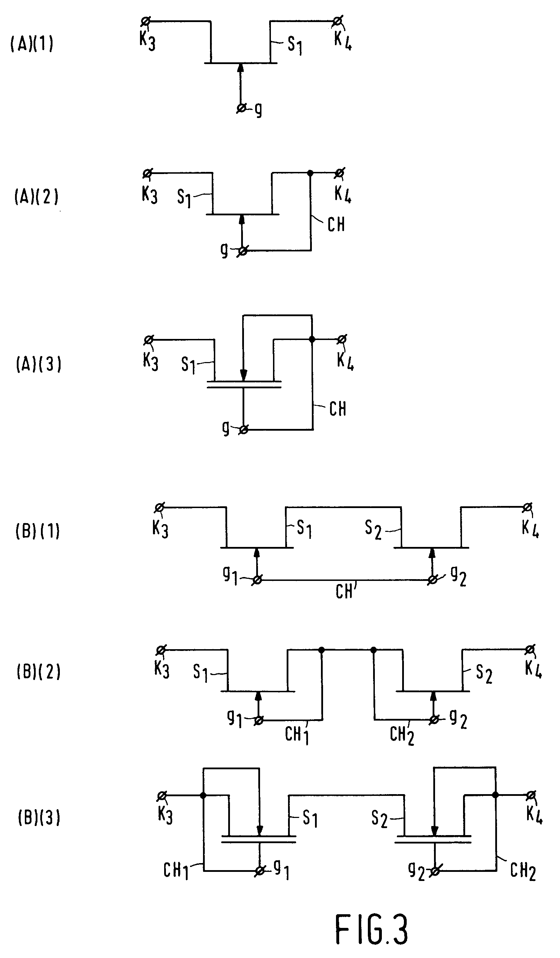

In the embodiments of circuit portion V shown in Fig. 3, the terminals K3 and K4 are formed by main electrodes of field effect transistors forming part of the circuit V. Fig. 3(a)1 to Fig. 3(a)3 show embodiments of the circuit portion V which are capable of limiting the input current flowing through the circuit portion V in one direction only. These embodiments of circuit portion V may be used in the embodiments of a circuit arrangement according to the invention as shown in Figs. 1 and 2a, but not in the embodiment shown in Fig. 2b. Fig. 3(b)1 to Fig. 3(b)3 show embodiments of circuit portion V suitable for use in the embodiment of a circuit arrangement according to the invention as shown in Fig. 2b.

Fig. 3(a)1 shows a field effect transistor of the junction FET type. Terminals K3 and K4 are formed by the drain and the source, respectively, of this junction FET. This embodiment has a floating gate (g).

Fig. 3(a)2 also shows a field effect transistor of the junction FET type. In this embodiment the terminals K3 and K4 are again formed by the drain and the source, respectively. The gate (g) in this embodiment is connected to the source by means of a conductive chain CH.

Fig. 3(a)3 shows a field effect transistor of the depletion MOSFET type. Terminals K3 and K4 are formed by the drain and the source, respectively. The gate (g) is connected to the source *via* a conductive chain CH.

Fig. 3(b)1 shows two field effect transistors of the junction FET type connected in series. Terminal K3 is formed by the drain of a first junction FET. The source of the first junction FET is conductively connected to the source of a second junction FET. The drain of the second junction FET in this embodiment forms the terminal K4. The gate (g1) of the first junction FET is connected to the gate (g2) of the second junction FET by means of a conductive chain CH.

Fig. 3(b)2 also shows two field effect transistors of the junction FET type connected in series. Terminal K3 is formed by the drain of a first junction FET. The source of the first junction FET is connected to the gate (g1) of the first junction FET and to the source of a second junction FET by means of a conductive chain CH1. The drain of the second junction FET in this embodiment forms the terminal K4. The source of the second junction FET is connected to the gate (g2) of the second junction FET by means of a conductive chain CH2.

Fig. 3(b)3 shows two field effect transistors of the depletion MOSFET type connected in series. Terminal K3 is formed by the drain of a first depletion MOSFET. The drain of the first depletion MOSFET is connected to the gate (g1) of the first depletion MOSFET *via* a conductive chain CH1. The source of the first depletion MOSFET is connected to the source of a second depletion MOSFET. The drain of the second depletion MOSFET in this embodiment forms the terminal K4 and is connected to the gate (g2) of the second depletion MOSFET *via* a conductive chain CH2.

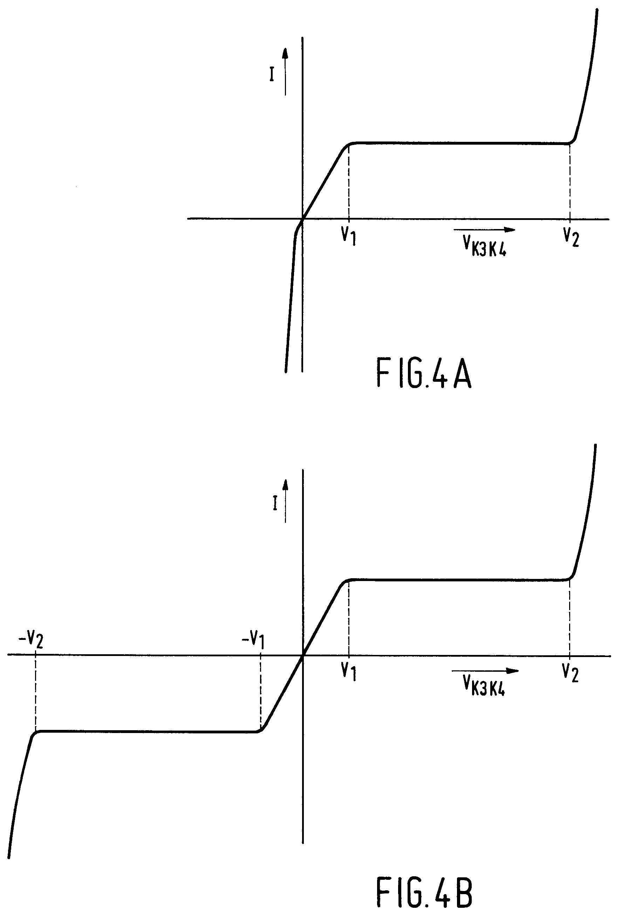

In Figs. 4a and 4b, the voltage is plotted on the horizontal axis and the current on the vertical axis in relative units. Fig. 4a diagrammatically shows the current-voltage characteristic of the embodiments of circuit portion V depicted in Fig. 3a. The curve in Fig. 4a shows the current flowing through the circuit portion V as a function of the potential difference VK3K4 between terminals K3 and K4 of the circuit portion V. It is apparent that the current rises substantially proportionally with VK3K4 for comparatively low positive values of VK3K4. So the circuit portion V behaves approximately as an ohmic resistor in this range of the potential difference VK3K4. When the potential difference VK3K4 rises to values higher than a value V1 indicated in Fig. 4a, however, the current remains substantially equal to the value achieved when the potential difference VK3K4 equals V1. This behaviour remains substantially unchanged as long as the potential difference VK3K4 remains smaller than a value V2 also indicated in Fig. 4a. The current rises very strongly as a function of the potential difference for values of the potential difference VK3K4 higher than V2. For negative values of the potential difference VK3K4, the circuit portion V behaves approximately as a diode, and no current limitation occurs. The embodiments of the circuit portion V shown in Fig. 3a, accordingly, have a current-limiting effect only when the potential difference VK3K4 is grater than V1 and smaller than V2. The values V1 and V2 are obviously determined by the dimensioning and type of the field effect transistor used. Fig. 4b diagrammatically shows the current-voltage characteristic of the embodiments of circuit portion V depicted in Fig. 3b. It is apparent that this current-voltage characteristic is symmetrical relative to the point (VK3K4 = 0, I = 0). The current-voltage characteristic for positive values of the potential difference VK3K4 corresponds to the current-voltage characteristic shown in Fig. 4a described above for the embodiments of circuit portion V depicted in Fig. 3a. This means that current limitation is obtained not only for values of VK3K4 between V1 and V2, but also for values of VK3K4 between -V1 and -V2 for the embodiments of circuit portion V shown in Fig. 3b. Embodiments of circuit portion V which limit the current in two directions have thus been realised. The current rises very strongly as a function of the voltage for values of VK3K4 higher than V2 or lower than -V2. For values of VK3K4 lower than V1 and higher than -V1, there is a substantially linear relation between the current and the value of VK3K4, so that the circuit portion V behaves substantially as an ohmic resistor in this range.

## Claims

1. A circuit arrangement for operating a load from a supply voltage, provided with
- input terminals for connection to poles of a supply voltage source,
- a circuit portion V for limiting an input current which flows through the input terminals owing to the supply voltage during operation, comprising a field effect transistor S1 provided with two main electrodes and a gate electrode and coupled to an input terminal such that the input current flows through both main electrodes of the field effect transistor S1 during operation,
characterized in that the field effect transistor S1 is of the depletion FET type and is coupled to the input terminals of the circuit arrangement exclusively *via* the main electrodes.

2. A circuit arrangement as claimed in Claim 1, characterized in that the circuit portion V for limiting the input current comprises a further field effect transistor S2 provided with two further main electrodes and a further gate electrode, the further field effect transistor being of the depletion FET type and being coupled to the input terminals of the circuit arrangement exclusively *via* the further main electrodes, while the first field effect transistor S1 is connected in series with the further field effect transistor S2 in that a main electrode of field effect transistor S1 is connected to a corresponding main electrode of field effect transistor S2.

3. A circuit arrangement as claimed in Claim 1 or 2, characterized in that one or several of the field effect transistors present in the circuit portion V is/are of the junction FET type.

4. A circuit arrangement as claimed in Claim 1, 2 or 3, characterized in that one or several of the field effect transistors present in the circuit portion V is/are of the depletion MOSFET type.

5. A circuit arrangement as claimed in any one of the preceding Claims, characterized in that the gate of each field effect transistor present in the circuit portion V is connected to a main electrode of that same field effect transistor *via* a conductive chain.

6. A circuit arrangement as claimed in Claim 2, 3 or 4, characterized in that the gates of the field effect transistors present in circuit portion V are interconnected *via* a conductive chain.

7. A circuit arrangement as claimed in any one or several of the preceding Claims, characterized in that the circuit portion V is constructed as an integrated circuit.

8. A circuit arrangement as claimed in any one or several of the preceding Claims, characterized in that the load is a discharge lamp.
